Europäisches Patentamt

European Patent Office

Office européen des brevets

(19)

(11) Veröffentlichungsnummer : **0 062 275**
**B1**

(12)

# EUROPÄISCHE PATENTSCHRIFT

(45) Veröffentlichungstag der Patentschrift :
07.08.85

(21) Anmeldenummer : 82102633.3

(22) Anmeldetag : 29.03.82

(51) Int. Cl.⁴ : **H 05 B 41/29, H 02 M 7/533**

(54) **Vorschaltanordnung zum Betreiben von Niederdruckentladungslampen.**

(30) Priorität : 30.03.81 DE 3112499

(43) Veröffentlichungstag der Anmeldung :
13.10.82 Patentblatt 82/41

(45) Bekanntmachung des Hinweises auf die Patenterteilung : 07.08.85 Patentblatt 85/32

(84) Benannte Vertragsstaaten :
AT BE CH DE FR GB IT LI

(56) Entgegenhaltungen :
BE-A- 885 744
FR-A- 2 390 068

(73) Patentinhaber : Patent-Treuhand-Gesellschaft für
elektrische Glühlampen mbH
Hellabrunner Strasse 1
D-8000 München 90 (DE)

(72) Erfinder : Zuchtriegel, Anton, Ing. grad.
Sudetenstrasse 33
D-8021 Taufkirchen (DE)

## Beschreibung

Die Erfindung betrifft eine Vorschaltanordnung — zum Betreiben einer oder mehrerer Niederdruckentladungslampen —, die einen selbsterregten Gegentaktschalter enthält, der zwei mit den Kollektor-Emitter-Strecken in Reihe liegende gleichsinnig gepolte Schalttransistoren T1, T2 aufweist, die die Anschlüsse einer Gleichspannungsversorgung überbrücken. Nach der BE-A-885 744 ist bei Mehrlampenbetrieb jeder Lampenbetriebskreis mit einem eigenen Serienresonanzkreis gekoppelt, der aus der jeweiligen Vorschaltinduktivität L1 bzw. L1' ... und einem Kondensator C1 bzw. C1' ... besteht, wobei die einzelnen Lampenbetriebskreise — mit den entsprechenden Serienresonanzkreisen — in Parallelschaltung angeordnet sind.

Weiter ist nach der BE-A-885 744 sowohl für den Einlampen — als auch Mehrlampenbetrieb eine Schutzschaltung vorgesehen, die im Störfall, z. B. bei Nichtzünden einer Lampe, den Transistor-Gegentaktschalter abschaltet und somit für ein sicheres Betriebsverhalten sorgt. Die Schutzschaltung enthält vorteilhaft einen Thyristor, der in der Verbindungsleitung zwischen der Basis des — mit dem Pluspol der Gleichspannungsversorgung verbundenen — Schalttransistors T1 und dem Minuspol der Gleichspannungsversorgung angeordnet ist.

Bei dem bisherigen Ausführungsbeispiel der Schutzschaltung wird die Betriebsspannung des Abschalt-Thyristors ausschließlich von dem Siebkondensator (ein Elektrolytkondensator) abgeleitet, der dem Netzfilter mit anschließendem Brückengleichrichter nachgeschaltet ist. Von Nachteil hierbei ist, daß der am Siebkondensator herrschende Spannungszustand je nach Belastung durch die Schaltung unterschiedlich ist. Naturgemäß tritt eine höhere Belastung bei Lastunterbrechung gegenüber der ungestörten Betriebsart mit angeschlossener Last auf, so daß sich gerade in dem Zustand, in dem der Abschalt-Thyristor in Funktion treten muß, seine Schaltbedingungen infolge eines niedrigen Haltestromes verschlechtern.

Ursache für die Spannungsabnahme am Siebkondensator der Gleichspannungsversorgung ist die strombegrenzende Wirkung der Netzoberwellen-Filterdrossel im vorgeschalteten Netzfilter. Bei Eintritt eines Lastabwurfes während des normalen Betriebszustandes liefert der Siebkondensator den erhöhten Strombedarf für kurze Zeit (innerhalb der Ansprechzeit der Schutzabschaltung) in die Schaltung ohne starken Spannungseinbruch nach, so daß im allgemeinen noch tragbare Schaltbedingungen bestehen. Treten jedoch derartige Schaltzustände (z. B. wenn eine Lampe nicht angeschlossen ist) während des Einschaltens des Gerätes auf, kann sich eine Ladung mit höherem Potential am Siebkondensator erst gar nicht aufbauen. Dies kann zum Versagen der Schutzschaltung führen.

Der Erfindung liegt die Aufgabe zugrunde, für eine Lampenbetriebsschaltung gemäß der BE-A-885 744 — sowohl für den Einlampen- als auch Mehrlampenbetrieb — eine Schutzabschaltung zu schaffen, die bei jedem Betriebszustand ein sicheres Ansprechen gewährleistet.

Die Vorschaltanordnung mit den im Oberbegriff des Hauptanspruchs genannten Merkmalen ist erfindungsgemäß dadurch gekennzeichnet, daß die Betriebs- und Zündspannung für den Abschalt-Thyristor einem Kondensator entnommen ist, der über eine Gleichrichterschaltung aus den Vorschaltinduktivitäten gespeist wird. Bei dieser Spannungsversorgung für den Thyristor TH ergibt gerade bei Lastunterbrechung die an den Serienresonanzkreisen L1-C1 bzw. L1'-C1' auftretende starke Spannungserhöhung besonders gute Schaltbedingungen. Aus dieser Spannungserhöhung der Serienresonanzkreise wird auch das Abschaltkriterium für den Thyristor TH hergeleitet, so daß zur Triggerung des Thyristors TH auf separate, mit den Vorschaltinduktivitäten L1 bzw. L1' gekoppelte Steuerwicklungen verzichtet werden kann.

Die Erfindung ist anhand der folgenden Figuren näher erläutert :

Figur 1   ist ein Blockschaltbild der Vorschaltanordnung ;

Figur 2   zeigt das Schaltbild eines Ausführungsbeispiels für den Einlampenbetrieb ;

Figur 3   zeigt das Schaltbild eines Ausführungsbeispiels für den Mehrlampenbetrieb.

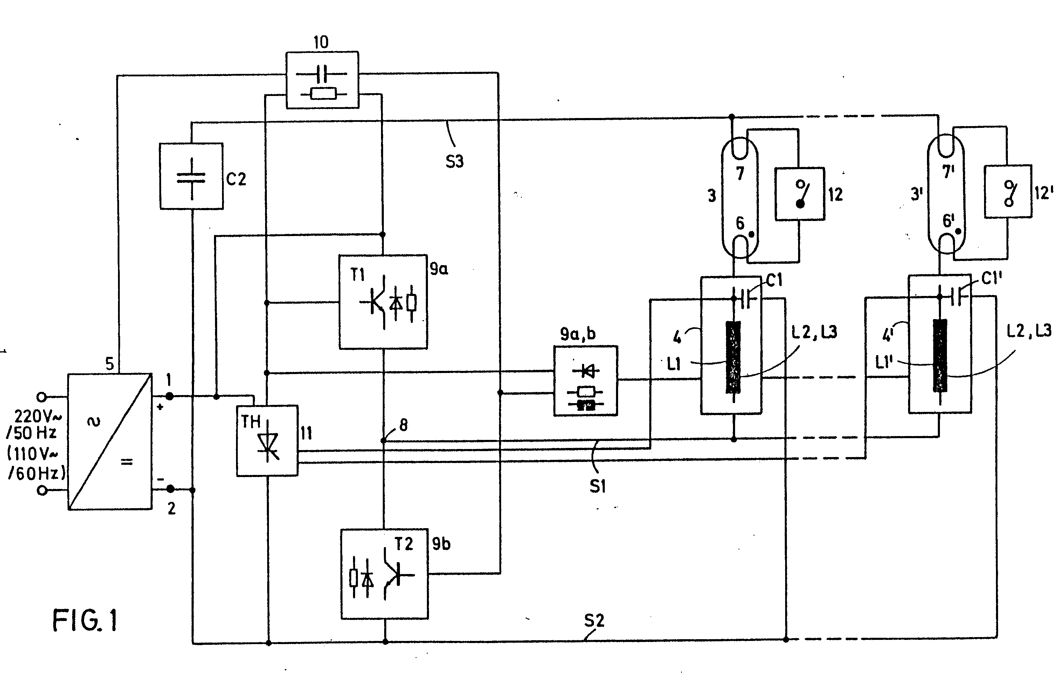

Das Blockschaltbild der Figur 1 gibt den Prinzipaufbau der Vorschaltanordnung wieder. Eine Gleichspannungsversorgung mit den Anschlüssen 1, 2 ist von zwei mit den Kollektor-Emitter-Strecken in Reihe liegenden, gleichsinnig gepolten Hochvolt-Schalttransistoren T1, T2 überbrückt. Die Transistor-Anordnung arbeitet als selbstschwingender Gegentaktschalter, über den eine oder mehrere Niederdruckentladungslampen 3, 3' gespeist werden. Bei Mehrlampenbetrieb — es lassen sich bei entsprechender Dimensionierung der Vorschaltgerätebauteile beliebig viele Lampenbetriebskreise anfügen — enthält jeder Lampenbetriebskreis eine eigene Vorschaltinduktivität L1 bzw. L1' und ist mit einem eigenen Serienresonanzkreis 4, 4' gekoppelt, der aus der jeweiligen Vorschaltinduktivität L1 bzw. L1' und einem Kondensator C1 bzw. C1' besteht. Die einzelnen Lampenbetriebskreise — mit den entsprechenden Serienresonanzkreisen — sind in Parallelschaltung angeordnet. Bei Einlampenbetrieb ist dementsprechend dem einen Lampenbetriebskreis ein Serienresonanzkreis 4 zugeordnet.

Die Schaltungsanordnung ist optimal funktionsfähig, wenn sie mit Gleichspannung geringer Welligkeit ≤ 20 % gespeist wird. Mittels eines vorgeschalteten Wandlerteils 5, das die für den Transistor-Gegentaktschalter T1, T2 notwendige Gleichspannung liefert, ist die Schaltungsanordnung an üblicher Netzwechselspannung, z. B. 220 V/50 Hz (bzw. 110 V/60 Hz) anschließbar. Das Wandlerteil 5, das vorteilhaft aus einem Brückengleichrichter mit nachgeschaltetem Siebkondensator besteht sowie ein Netzfilter enthält, liefert bei Versorgung mit 220 V-Netzwechselspannung an den Anschlüssen 1, 2 eine Gleichspannung von ca. $\sqrt{2} \cdot 220$ V. Über den Transistor-Gegentaktschalter T1, T2 wird dann den jeweiligen Lampenbetriebskreisen in wechselnder Polung nur die halbe Spannung zugeführt. Die Serienresonanzkreise 4, 4' bewirken, daß an den einzelnen Lampen 3, 3' — insbesondere während des Zündvorgangs — eine wesentlich höhere Spannung anliegt ; auch während des laufenden Betriebs ist für eine ausreichend hohe Spannung an den Lampen 3, 3' gesorgt.

Daneben ist mit dieser Schaltungsanordnung auch der direkte Betrieb an einem Gleichstrom-Netz (nicht dargestellt) möglich. Das Wandlerteil entfällt dann.

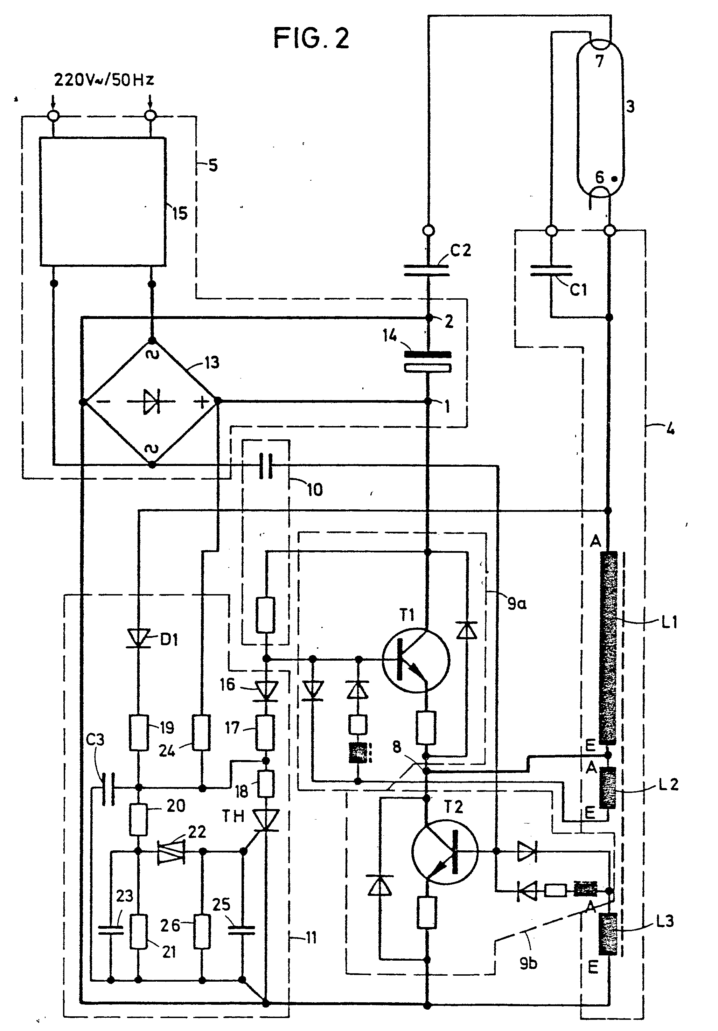

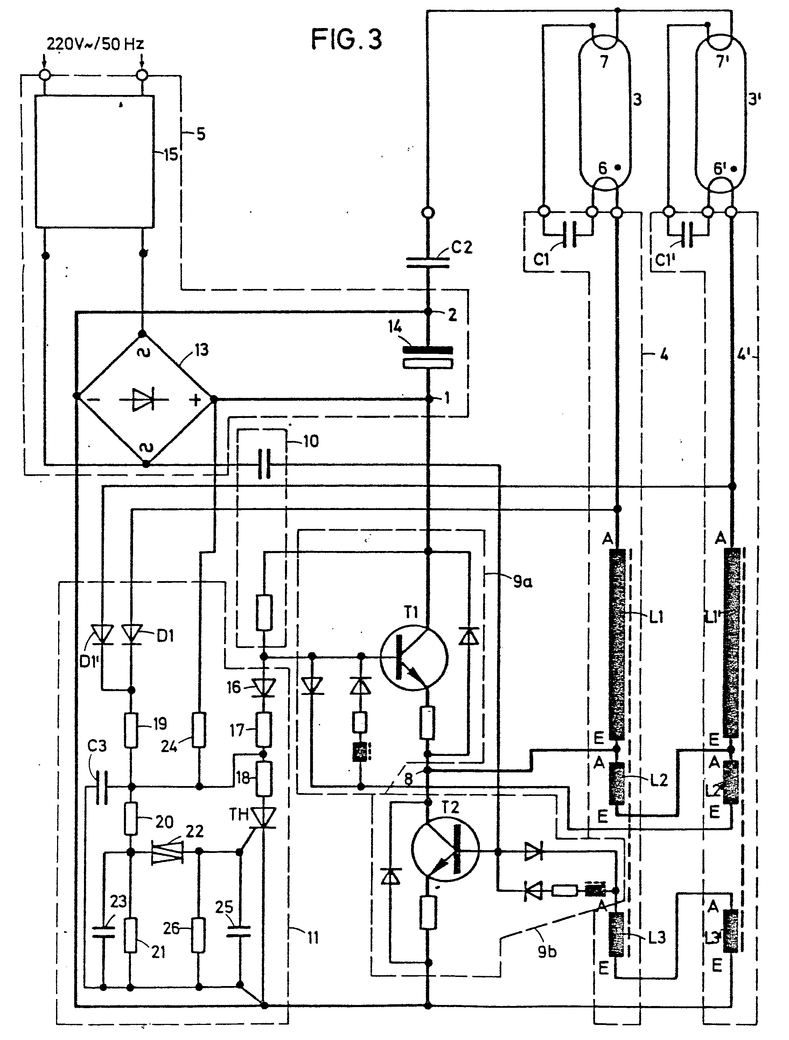

Der schaltungsgemäße Aufbau ist dergestalt, daß die ersten Elektroden 6, 6' der Lampen 3, 3' über die entsprechenden Vorschaltinduktivitäten L1, L1' — bzw. Schwingkreisinduktivitäten — an eine Sammelleitung S1 angeschlossen sind, die an den Mittelabgriff 8 zwischen den beiden Transistoren T1, T2 des Gegentaktschalters gelegt ist. Des weiteren sind die Elektroden 6, 6' über die Schwingkreiskondensatoren C1, C1' an eine Sammelleitung S2 angeschlossen, die an den einen (Minus-)Pol 2 der Gleichspannungsversorgung geht. Modifizierte Anordnungen der Schwingkreiskondensatoren sind in den Figuren 2 und 3 gezeigt. Die zweiten Elektroden 7, 7' der Lampen 3, 3' sind mit einer Sammelleitung S3 verbunden, die über einen Kondensator C2 relativ großer Kapazität ebenfalls an den (Minus-)Pol 2 der Gleichspannungsversorgung angeschlossen ist. Der Kondensator C2, der mindestens 50-fachen Kapazitätswert eines Schwingkreiskondensators C1 hat, bewirkt, daß die Sammelleitung S3 praktisch auf Mittelpotential der Gleichspannungsversorgung gelegt ist. Über eine derartige Schaltungsanordnung werden die Lampen 3, 3' mit Wechselspannung höherer Frequenz (im Ton- oder Hochfrequenzbereich) gespeist. Die Impedanz des Kondensators C2 ist bei der hohen Frequenz der Lampenströme sehr niedrig ; der Kondensator C2 wirkt nur als Blindleistungs-Verbraucher. Die Taktfrequenz des Transistor-Oszillators ist durch die Serienresonanzschwingkreise 4, 4' bestimmt, wobei die einzelnen Lampen 3, 3' für eine Dämpfung der jeweiligen Schwingkreise sorgen.

Die Schwingkreisinduktivitäten liefern über eigene Wicklungen die Steuerenergie für die Schalttransistoren T1, T2 des Gegentaktschalters. Mit den Vorschaltinduktivitäten L1, L1' sind Steuerwicklungen L2, L2' bzw. L3, L3' gekoppelt, die über ein Netzwerk aus schnellen Schaltdioden, Widerständen und Induktivitäten mit der Basis des entsprechenden Schalttransistors T1 bzw. T2 verbunden sind. Mit 9a bzw. 9b ist die gesamte Steuerschaltung des Transistors T1 bzw. T2 bezeichnet.

Das Anlaufen des Transistor-Oszillators wird durch eine Anschwingschaltung 10 bewirkt, die den mit dem Minus-Pol 2 verbundenen Transistor T2 über dessen Basis triggert. Der leitend gesteuerte Schalttransistor T2 stößt die Schwingkreise 4, 4' an, deren rückgekoppelte Steuerströme die Oszillation des Gegentaktschalters T1, T2 aufrechterhalten.

Die Serienresonanz-Schwingschaltungen 4, 4' arbeiten so lange stabil — mit geringen Eigenverlusten — wie die jeweilige Lampe 3 bzw. 3' als Last angeschlossen ist und Energie entnimmt. Die Schwingkreise 4, 4' müssen so bedämpft sein, daß gute Ansteuerbedingungen der Schalttransistoren T1, T2 eingehalten werden. Bei Lastunterbrechung, z. B. bei einem Lampenwechsel, tritt eine starke Spannungsüberhöhung und dadurch eine erhebliche Geräteverlustleistung auf, die bei Fehlen geeigneter Schaltungsmaßnahmen zur Zerstörung des Gerätes führen würde. Eine Schutzschaltung 11 verhindert eine Zerstörung des Gerätes durch Ausschalten der Schalttransistoren T1, T2 innerhalb von ca. 0,5 sec nach dem Auftreten der Störung. Zugleich wird verhindert, daß bei einseitiger Entnahme einer Lampe 3 bzw. 3' aus einer Lampenfassung an den freien Anschlußstiften eine gefährliche Berührungsspannung auftritt. Die Schutzschaltung 11 enthält ein steuerbares Schaltelement TH, das in der Verbindungsleitung zwischen der Basis des — mit dem Pluspol 1 der Gleich-spannungsversorgung verbundenen — Schalt-transistors T1 und dem Minuspol 2 der Gleich-spannungsversorgung angeordnet ist. Der er-findungsgemäße Aufbau der Schutzschaltung 11 und die Ansteuerung des steuerbaren Schaltelements TH sind anhand der weiteren Figuren 2 und 3 erläutert.

Wegen der hohen Spannung des Resonanzkondensators C1, C1' bei nicht brennender Lampe 3, 3' — die gleichzeitig Leerlaufspannung für die Lampe ist — zünden die Niederdruckentladungslampen 3, 3' auch ohne Vorheizung der Elektroden, was eine Kaltzündung der Lampen bedeutet. Zur Sicherstellung einer großen Schaltfestigkeit können die Schalter 12, 12' vorgesehen sein, die die Lampen 3, 3' beim Einschalten der Netzspannung überbrücken, um die Elektroden 6, 7 ; 6', 7' vorzuheizen. Die Schalter 12, 12' geben durch Öffnen die Lampenzündung nach ausreichender Vorheizzeit frei. Als Schalter 12, 12' eignen sich schnellschaltende Vierschicht-Dioden oder Schalter mit einem Glimmzünder, die einen hohen Glimmstrom erlauben und die Lampenzündung bei nicht vorgeheizten Elektroden 6, 7 ; 6', 7' verhindern. Schaltungsanordnungen, bei denen durch entsprechende Anordnung der Kondensatoren C1, C1' ... auf den Startschalter verzichtet werden kann, sind in den Figuren 2 und 3 gezeigt.

Insbesondere soll anhand der Figuren 2 und 3 die erfindungsgemäße Ausgestaltung der Schutzschaltung 11 erläutert werden. Vorweg jedoch noch Einzelheiten zum allgemeinen Schaltungsaufbau der Figuren 2 und 3. Über das Vorschaltgerät werden eine (Figur 2) bzw. zwei (Figur 3) 50 W/1,5 m-Leuchtstofflampen 3, 3' gespeist, deren Zündspannung über 800 V liegt. Die Lampenbetriebsfrequenz ist ca. 35 kHz. Die Netzaufnahmeleistung des Gerätes incl. Netzfilter beträgt beim Einlampenbetrieb ca. 56 W, beim Zweilampenbetrieb ca. 112 W. Das die Gleichspannung liefernde Wandlerteil 5 ist im Aufbau gezeigt. Einem Brückengleichrichter 13 ist ein Siebkondensator 14 nachgeschaltet ; ein Filter 15 schirmt das Netz gegen Hochfrequenzwellen und unzulässig hohe Ladestromspitzen ab.

Wie weiter aus dem Schaltbild ersichtlich, sind die Steuerwicklungen L2, L2' bzw. L3, L3' bei Betrieb mehrerer Lampenkreise (Multi-Parallelbetrieb) auf die einzelnen Lampenbetriebskreise aufgeteilt (Figur 3), so daß jeder Kreis nur den n-ten Teil der Steuerenergie zu liefern hat. Die Summation der Spannungsanteile soll optimal so hoch sein, daß die Schalttransistoren T1, T2 in die „Quasi-Sättigung" gesteuert werden. Die den beiden Schalttransistoren T1, T2 jeweils zugeordneten Gruppen von Steuerwicklungen L2, L2' und L3, L3' sind galvanisch voneinander getrennt, wobei die einzelnen Wicklungen einer Gruppe in einer Reihenschaltung angeordnet sind, die die Basis-Emitter-Strecke des jeweiligen Schalttransistors T1 bzw. T2 überbrückt. Bei Betrieb nur einer Lampe ist jeweils auch nur die Steuerwicklung L2 und L3 mit der Vorschaltinduktivität L1 gekoppelt (Figur 2).

Aus den Steuerwicklungen L2, L2' bzw. L3, L3' werden über Steuernetzwerke 9a bzw. 9b die beiden Schalttransistoren T1, T2 mit Energie versorgt. Auf den genauen Aufbau und die Funktion der Steuernetzwerke 9a, 9b soll hier nicht näher eingegangen werden. Ebenso wird auch die den Transistor T2 triggernde Anschwingschaltung 10 nicht näher behandelt.

Die Figuren 2 und 3 zeigen des weiteren unterschiedliche Anschlußmöglichkeiten für die Kondensatoren C1, C1' der Serienresonanzkreise 4, 4'.

Das Grundelement der Schutzschaltung 11 ist ein steuerbares Schaltelement. Als solches wird vorteilhaft ein in Flußrichtung zum Minuspol 2 hin gepolter Thyristor TH verwendet. Die Anode ist über eine Diode 16 — mit in Reihe liegender Strombegrenzungswiderständen 17, 18 — an die Basis des Transistors T1 gelegt. Die Zünd- und Abschaltenergie für den Thyristor TH wird einem eigenen Betriebskondensator C3 entnommen, der dem Thyristor TH (in Reihe mit dem Widerstand 18) parallelgeschaltet ist. Dieser Kondensator C3 (Kapazität zwischen 0,5 und 1 μ F) hat die Aufgabe, das Gleichspannungspotential für das Zustandskriterium Normalbetrieb/Abschaltung wie auch die Schaltenergie für den Thyristor TH zur Verfügung zu stellen. Die direkte Parallelschaltung des Kondensators C3 mit dem Thyristor TH verhindert sicher eine hochfrequente Spannungsbelastung des Thyristors TH und die daraus resultierenden schädlichen bzw. unerwünschten « Überkopfzündungen ».

Die Ableitung der Energie für den Kondensator C3 erfolgt aus dem Hochvoltbereich der Schaltung. Hierzu sind die Hochvolt-Gleichrichterdioden D1, D1' verwendet, die die höchsten auftretenden Spannungsspitzen (größer als 2 kV) einwandfrei sperren. Die in Flußrichtung zum Thyristor TH hin gepolten Dioden D1, D1' sind mit ihren anodenseitigen Anschlüssen jeweils an den Verbindungspunkt zwischen der Vorschaltinduktivität L1 bzw. L1' und dem Kondensator C1 bzw. C1' gelegt und mit ihren kathodenseitigen Anschlüssen parallelgeschaltet. Dieser Verbindungspunkt ist über einen Ladewiderstand 19 zur Strombegrenzung direkt an den mit der Thyristoranode verbundenen Anschluß des Kondensators C3 geführt.

Der Thyristorsteuerkreis, der hier durch den Anschluß an den Kondensator C3 aus einem hohen Gleichspannungspotential gespeist wird, enthält einen dem Kondensator C3 parallelgeschalteten Spannungsteiler 20, 21. Das Spannungsteilerverhältnis ist so gewählt, daß im Normalbetrieb die Spannung am Widerstand 21 unter der Durchbruchspannung des Diacs 22 bleibt. Über letzteren ist die Steuerelektrode des Thyristors TH am Mittelabgriff des Spannungsteilers 20, 21 angeschlossen. Der Diac 22 ist das Schaltkriterium zwischen Normalbetrieb und lastfreiem bzw. Überspannungsbetrieb. Beim Erreichen seiner Durchbruchspannung startet der Diac 22 den Thyristor TH. Die Zündenergie für den Diac 22 liefert der dem Widerstand 21 parallelgeschaltete Kondensator 23, der zusammen mit dem Widerstand 20 das Zeitglied für das Ansprechen der Schutzschaltung bildet. Die Dimensionierung des Zeitglieds 20, 23 ist so gewählt, daß ein Ansprechen des Thyristors TH in der Zündphase der Lampen sicher verhindert wird (in normaler Lampenzündzeit wird die Triggerschwelle für den Thyristor nicht erreicht).

Bei Lastunterbrechung, z. B. bei Ausfall einer Lampe, lädt sich der Kondensator C3 — obwohl die Spannung am Siebkondensator 14 abfällt — über das Gleichrichternetzwerk D1, D1' (bzw. bei Einlampenbetrieb über die einzelne Gleichrichterdiode D1) und dem Ladewiderstand 19 auf höhere Spannung auf. In dieser Beschaltung wird die infolge des ungedämpften Resonanzfalls (bei Lastunterbrechung) am betreffenden Serienresonanzkreis 4 bzw. 4' auftretende starke Spannungserhöhung für die Sicherheitsabschaltung genutzt. Die Spannungszunahme am Kondensator C3 löst dann die Triggerung des Thyristors TH (bei Erreichung der Diacdurchbruchspannung) und damit dessen Zündung aus. Bei dem Schaltvorgang wird der Basis des Transistors T1 die Steuerenergie durch Ableitung zum negativen Pol 2 der Gleichspannungsversorgung entzogen. Der Transistor T1 wird gesperrt und die Schwingkreise 4, 4' entregt.

Über den Widerstand 24 ist der Thyristor TH mit dem Pluspol 1 der Gleichspannungsversorgung verbunden. Durch die gleichzeitige Gleichstromspeisung (Haltestrom) des Thyristors TH bleibt dieser im Leitend-Zustand, dadurch ist jeder erneute Schwingungseinsatz unterbunden. Die Diode 16 sperrt die Wechselspannung vom Anodenkreis des Thyristors TH. Der weiter in der Steuerschaltung enthaltene Kondensator 25 — über diesen ist die Steuerelektrode des Thyristors TH mit dessen Kathode verbunden — unterbindet unbeabsichtigtes Triggern des Thyristors TH bei Einwirkung von Störspannungsspitzen auf dessen Steuerelektrode. Der parallel zum Kondensator 25 geschaltete Widerstand 26 verhindert das Ansprechen der Schutzschaltung 11 bei zu hohen Leckströmen des Diacs 22 und der Thyristor-Steuerelektrode (Gate-Offsetstrom).

Bei Ansprechen des Schutzschalters 11 wird die Vorschaltanordnung erst nach Abschalten der Versorgung — der Thyristor TH geht dann in den Sperrzustand — wieder betriebsbereit.

**Patentansprüche**

1. Vorschaltanordnung zum Betreiben einer oder mehrerer Niederdruckentladungslampen (3, 3'), die einen selbsterregenden Gegentaktschalter enthält, der zwei mit den Kollektor-Emitter-Strecken in Reihe liegende gleichsinnig gepolte Schalttransistoren (T1, T2) aufweist, die die Anschlüsse (1, 2) einer Gleichspannungsversorgung (5) überbrücken, und bei der jeder Lampenbetriebskreis mit einem eigenen Serienresonanzkreis (4, 4') gekoppelt ist, der aus der jeweiligen Vorschaltinduktivität (L1 bzw. L1') und einem Kondensator (C1 bzw. C1') besteht, wobei eine Schutzschaltung (11) vorgesehen ist mit einem Abschalt-Thyristor (TH), der in der Verbindungsleitung zwischen der Basis des mit dem Pluspol (1) der Gleichspannungsversorgung (5) verbundenen Schalttransistors (T1) und dem Minuspol (2) der Gleichspannungsversorgung (5) angeordnet ist, und zwar in Flußrichtung zum Minuspol (2) hin gepolt, dadurch gekennzeichnet, daß die Betriebs- und Zündspannung für den Abschalt-Thyristor (TH) einem Kondensator (C3) entnommen ist, der über eine Gleichrichterschaltung (D1, D1') aus den Vorschaltinduktivitäten (L1, L1') gespeist wird.

2. Vorschaltanordnung nach Anspruch 1, dadurch gekennzeichnet, daß der Kondensator (C3) dem Abschalt-Thyristor (TH) mit einem in Reihe liegenden Strombegrenzungswiderstand (18) parallelgeschaltet ist.

3. Vorschaltanordnung nach Anspruch 1 und 2, dadurch gekennzeichnet, daß bei Einlampenbetrieb der mit der Anode des Abschalt-Thyristors (TH) verbundene Anschluß des Kondensators (C3) über eine Gleichrichterdiode (D1), die in Flußrichtung zum Kondensator (C3) hin gepolt ist, an den Verbindungspunkt zwischen der Vorschaltinduktivität (L1) und dem Kondensator (C1) des Serienresonanzkreises (4) angeschlossen ist.

4. Vorschaltanordnung nach Anspruch 1 und 2, dadurch gekennzeichnet, daß bei Mehrlampenbetrieb der mit der Anode des Abschalt-Thyristors (TH) verbundene Anschluß des Kondensators (C3) über ein Netzwerk von mit den kathodenseitigen Anschlüssen parallelgeschalteten Gleichrichterdioden (D1, D1'), die in Flußrichtung zum Kondensator C3 hin gepolt sind, an die jeweiligen Verbindungspunkte zwischen den Vorschaltinduktivitäten (L1 bzw. L1') und den Kondensatoren (C1 bzw. C1') der Serienresonanzkreise (4, 4') angeschlossen ist.

5. Vorschaltanordnung nach Anspruch 3 und 4, dadurch gekennzeichnet, daß in der Verbindungsleitung zwischen der Gleichrichterdiode bzw. den -dioden (D1, D1') und dem Anschluß am Kondensator (C3) ein Ladewiderstand (19) angeordnet ist.

6. Vorschaltanordnung nach Anspruch 5, dadurch gekennzeichnet, daß dem Kondensator (C3) ein Spannungsteiler aus zwei Widerständen (20, 21) parallelgeschaltet und die Steuerelektrode des Abschalt-Thyristors (TH) über einen Diac (22) an den Mittelabgriff des Spannungsteilers (20, 21) gelegt ist.

7. Vorschaltanordnung nach Anspruch 6, dadurch gekennzeichnet, daß der mit der Kathode des Abschalt-Thyristors (TH) verbundene Widerstand (21) des Spannungsteilers (20, 21) von einem Kondensator (23) überbrückt ist.

8. Vorschaltanordnung nach Anspruch 6, dadurch gekennzeichnet, daß die Steuerelektrode des Abschalt-Thyristors (TH) des weiteren über die Parallelschaltung eines Kondensators (25) mit einem Widerstand (26) mit der Kathode des Abschalt-Thyristors (TH) verbunden ist.

9. Vorschaltanordnung nach Anspruch 8, dadurch gekennzeichnet, daß die Anode des Abschalt-Thyristors (TH) über einen Widerstand (24) mit dem Pluspol (1) der Gleichspannungsversorgung (5) verbunden ist.

10. Vorschaltanordnung nach Anspruch 7 und 9, dadurch gekennzeichnet, daß bei Mehrlampenbetrieb die einzelnen Lampenbetriebskreise mit den entsprechenden Serienresonanzkreisen (4, 4') in Parallelschaltung angeordnet sind.

**Claims**

1. A lamp operating circuit for operating one or more low-pressure discharge lamps (3, 3') comprising a self-exciting push-pull switch composed of two switching transistors (T1, T2) that are polarized in the same direction, are serially connected with the collector-emitter paths, and bridge the terminals (1, 2) of a d-c supply (5), with each lamp operating circuit being coupled to its own series resonant circuit (4, 4') that is composed of the respective ballast inductance (L1, L1') and a capacitor (C1, C1'), with a protective circuit (11) being provided that includes a disconnect thyristor (TH) coupled in the connection line between the base of the switching transistor (T1) that is connected to the positive terminal (1) of the d-c supply (5) and the negative terminal (2) of the d-c supply (5) and is polarized for conduction to the negative terminal (2), wherein the operating and starting voltage for the disconnect thyristor (TH) is derived from a capacitor (C3) charged via a rectifier circuit (D1, D1') from the ballast inductances (L1, L1').

2. A lamp operating circuit according to claim 1, wherein the capacitor (C3) is connected across a series circuit formed by the disconnect thyristor (TH) and a current limiting resistor, (18).

3. A lamp operating circuit according to claims 1 and 2, wherein in single-lamp operation the terminal of the capacitor (C3) connected to the anode of the disconnect thyristor (TH) is connected, via a rectifier diode (D1) polarized for conduction to the capacitor (C3), to the junction point between the ballast inductance (L1) and the capacitor (C1) of the series resonant circuit (4).

4. A lamp operating circuit according to claims 1 and 2, wherein in multiple-lamp operation the terminal of the capacitor (C3) connected to the anode of the disconnect thyristor (TH) is connected, via a network of rectifier diodes (D1, D1') connected across the cathode side terminals and polarized for conduction to the capacitor (C3), to the respective junction points between the ballast inductances (L1, L1') and the capacitors (C1, C1') of the series resonant circuits (4, 4').

5. A lamp operating circuit according to claims 3 and 4, wherein a charging resistor (19) is coupled in the connection line between the rectifier diode or diodes (D1, D1') and the terminal of the capacitor (C3).

6. A lamp operating circuit according to claim 5, wherein a voltage divider composed of two resistors (20, 21) is connected across the capacitor (C3) and the gate electrode of the disconnect thyristor (TH) is coupled via a diac (22) to the center tap of the voltage divider (20, 21).

7. A lamp operating circuit according to claim 6, wherein the resistor (21) of the voltage divider (20, 21) connected to the cathode of the disconnect thyristor (TH) is bridged by a capacitor (23).

8. A lamp operating circuit according to claim 6, wherein the gate electrode of the disconnect thyristor (TH) is further connected, via the parallel arrangement of a capacitor (25) and a resistor (26), to the cathode of the disconnect thyristor (TH).

9. A lamp operating circuit according to claim 8, wherein the anode of the disconnect thyristor (TH) is connected via a resistor (24) to the positive terminal (1) of the d-c supply (5).

10. A lamp operating circuit according to claims 7 and 9, wherein in multiple-lamp operation the individual lamp operating circuits are connected across the respective series resonant circuits (4, 4').

**Revendications**

1. Circuit ballast pour faire fonctionner une ou plusieurs lampes (3, 3') de décharge à basse pression et qui comprend un commutateur push-pull à auto-excitation qui présente deux transistors de commutation (T1, T2) polarisés dans le même sens, se trouvant en série avec les trajets collecteur-émetteur, et qui shuntent les bornes (1, 2) d'une alimentation à tension continue (5), et dans le cas d'un fonctionnement à plusieurs lampes, chaque circuit de fonctionnement de lampe est couplé à un circuit propre (4, 4') de résonance série qui est constitué par l'inductivité ballast correspondante (L1 ou L1') et par un condensateur (C1 ou C1'), un circuit de protection (11) étant prévu, ayant un thyristor de déclenchement (TH) qui est disposé dans le conducteur de liaison entre la base du transistor de commutation (T1) relié à la borne plus (1) de l'alimentation (5) en tension continue et la borne moins (2) de l'alimentation (5) en tension continue, et avec une polarité dans le sens d'écoulement vers la borne moins (2), caractérisé en ce que la tension de fonctionnement et d'amorçage du thyristor de déclenchement (TH) est prélevée sur un condensateur (C3) qui est alimenté par un circuit redresseur (D1, D1') à partir des inductivités ballast (L1, L1').

2. Circuit ballast selon la revendication 1, caractérisé en ce que le condensateur (C3) est monté en parallèle sur le thyristor de déclenchement (TH) avec une résistance (18) de limitation de courant se trouvant en série.

3. Circuit ballast selon la revendication 1 et la revendication 2, caractérisé en ce que, lors d'un fonctionnement à une seule lampe, le raccordement du condensateur (C3) relié à l'anode du thyristor de déclenchement (TH) est connecté par une diode redresseuse (D1) qui est polarisée dans le sens d'écoulement vers le condensateur (C3) sur le point de liaison entre l'inductivité ballast (L1) et le condensateur (C1) du circuit de résonance série (4).

4. Circuit ballast selon la revendication 1 et la revendication 2, caractérisé en ce que, lors d'un fonctionnement à plusieurs lampes, le raccordement du condensateur (C3) relié à l'anode du thyristor de déclenchement (TH) est connecté par un réseau de diodes (D1, D1') redresseuses montées en parallèle avec les bornes du côté de cathode et qui sont polarisées dans le sens d'écoulement vers le condensateur (C3) aux points correspondants de liaison entre les inductivités ballast (L1 ou L1') et les condensateurs (C1 ou C1') des circuits (4, 4') de résonance série.

5. Circuit ballast selon la revendication 3 et la revendication 4, caractérisé en ce que, dans la conduite de liaison entre la diode redresseuse ou les diodes redresseuses (D1, D1') et le raccordement au condensateur (C3) on dispose une résistance de charge (19).

6. Circuit ballast selon la revendication 5, caractérisé en ce que sur le condensateur (C3) est monté en parallèle un diviseur de tension fait de deux résistances (20, 21) et l'électrode de commande du thyristor de déclenchement (TH) est appliquée par l'intermédiaire d'un diac (22) à la prise médiane du diviseur de tension (20, 21).

7. Circuit ballast selon la revendication 6, caractérisé en ce que la résistance (21) du diviseur de tension (20, 21) reliée à la cathode du thyristor de déclenchement (TH) est shuntée par un condensateur (23).

8. Circuit ballast selon la revendication 6, caractérisé en ce que l'électrode de commande du thyristor de déclenchement (TH) est reliée en outre par le montage parallèle d'un condensateur (25) sur une résistance (26) à la cathode du thyristor de déclenchement (TH).

9. Circuit ballast selon la revendication 8, caractérisé en ce que l'anode du thyristor de déclenchement (TH) est reliée par une résistance (24) à la borne plus (1) de l'alimentation en tension continue (5).

10. Circuit ballast selon la revendication 7 et la revendication 9, caractérisé en ce que, lors d'un fonctionnement à plusieurs lampes, les circuits individuels de lampe sont disposés en un montage parallèle avec les circuits correspondants (4, 4') de résonance série.

0 062 275

FIG.1

0 062 275

FIG. 2

220V∼/50Hz

2

# FIG. 3